(19) **Europäisches Patentamt**
**European Patent Office**
**Office européen des brevets**

(11) **EP 2 090 495 A1**

(12) **EUROPEAN PATENT APPLICATION**
published in accordance with Art. 153(4) EPC

(43) Date of publication:
**19.08.2009 Bulletin 2009/34**

(51) Int Cl.:
**B62D 5/04** (2006.01)  **B62D 6/00** (2006.01)
**F16H 1/28** (2006.01)  **B62D 101/00** (2006.01)
**B62D 113/00** (2006.01)  **B62D 119/00** (2006.01)
**B62D 137/00** (2006.01)

(21) Application number: **07831739.3**

(22) Date of filing: **13.11.2007**

(86) International application number:
**PCT/JP2007/072009**

(87) International publication number:
**WO 2008/059836 (22.05.2008 Gazette 2008/21)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **14.11.2006 JP 2006308064**

(71) Applicant: **JTEKT Corporation
Osaka-shi
Osaka 542-8502 (JP)**

(72) Inventors:
• **YAMANAKA, Kosuke**
**Osaka-shi**
**Osaka 542-8502 (JP)**

• **NAKANO, Shiro**
**Osaka-shi**
**Osaka 542-8502 (JP)**
• **HIGASHI, Kenji**
**Osaka-shi**
**Osaka 542-8502 (JP)**

(74) Representative: **TBK-Patent
Bavariaring 4-6
80336 München (DE)**

(54) **VEHICLE STEERING DEVICE**

(57) A planetary gear mechanism as a transfer ratio varying mechanism includes primary and secondary sun gears, three primary planetary gears and three secondary planetary gears. The numbers of teeth of the primary sun gear, the primary planetary gears, the secondary planetary gears, and the secondary sun gear are set in such a manner as to satisfy a predetermined particular relationship. By this, three primary planetary gears are disposed at equal intervals in a rotational direction of the primary sun gear, and three secondary planetary gears 22 are disposed at equal intervals in a rotational direction of the secondary sun gear.

FIG. 2

EP 2 090 495 A1

**Description**

Technical Field

The present invention relates to vehicle steering systems which can vary a transfer ratio of a turning angle of steered road wheels to a steering angle of a steering member.

Background Art

In the vehicle steering systems, there are vehicle steering systems in which the transfer ratio is varied by the use of a planetary gear mechanism (for example, refer to JP-A-2005-344759).

Disclosure of the Invention

Problem that the Invention is to Solve

The planetary gear mechanism includes a primary sun gear connected to a steering wheel, a secondary sun gear connected to a steering mechanism, primary planetary gears meshing with the primary sun gear, secondary planetary gears disposed on the same axes as the primary planetary gears and meshing with the secondary sun gear, and a carrier. Two primary planetary gears and two secondary planetary gears are provided circumferentially at equal intervals around the primary sun gear and the secondary sun gear, respectively, to which they correspond. The corresponding primary and secondary sun gears are supported on a common shaft in such a manner as to rotate together. Each shaft is supported on the carrier via bearings. In addition, the primary sun gear and the secondary sun gear are also supported on the carrier via bearings, respectively.

However, in the configuration described above, unless the shapes and dispositions of the primary sun gear and the primary planetary gears are set highly accurately, only one of the primary planetary gears is caused to mesh with the primary sun gear. In such a state that only one of the primary planetary gears is caused to mesh with the primary sun gear, the primary sun gear cannot almost be received by the other primary planetary gear, and this facilitates a radial shift of the primary sun gear. As a result, the primary sun gear is easily caused to be shifted in the radial direction due to a radial gap in the bearing which supports the primary sun gear.

In addition, with respect to the radial direction, the primary sun gear is made relatively difficult to be shifted in the direction in which it confronts the primary planetary gears, but the primary sun gear is relatively easily caused to be shifted in the direction in which it does not confront the primary planetary gears.

It is understood from what has been described above that there may exist a case that the primary sun gear is shifted largely in the radial direction and is prevented from meshing with the primary planetary gears properly, causing unnecessary torque fluctuation and noise. This will be true with the secondary sun gear, and hence, there may exist a case that the secondary sun gears is shifted largely in the radial direction and is prevented from meshing with the secondary planetary gears properly, causing unnecessary torque fluctuation and noise.

The invention has been made based on the aforesaid background and an object thereof is to provide a vehicle steering system which can attain a reduction in torque fluctuation and a reduction in noise in an ensured fashion.

Means for solving the problem

With a view to attaining the object, according to the invention, there is provided a vehicle steering system (1) comprising a transfer ratio varying mechanism (8) for varying a transfer ratio ($\theta 2/\theta 1$) of a turning angle ($\theta 2$) of steered road wheels (4R, 4L) to a steering angle ($\theta 1$) of a steering member (2), **characterized in that** the transfer ratio varying mechanism (8) includes a primary and secondary sun gears (19, 20) which are provided relatively rotatably about axes (L) which coincide with each other, three primary planetary gears (21) which mesh with the primary sun gear (19), three secondary planetary gears (22) which mesh with the secondary sun gear (20) and rotate together with the corresponding primary planetary gears (21) about the same axial centers, and a carrier (23) which supports the primary planetary gears (21) and the secondary planetary gears (22) via three shafts (27) which individually support the primary planetary gears (21) and the secondary planetary gears (22) which correspond to each other in such a manner that the primary planetary gears (21) and the secondary planetary gears (22) which correspond to each other rotates about their axial centers and which rotates about the axes (L) which coincide with each other, in that the first sun gear (19) is connected to the steering member (2), and the second sun gear (20) is connected to the steered road wheels (4R, 4L), and in that when letting the number of teeth of the primary sun gear (19) be Z1, the number of teeth of the primary planetary gears (21) be Z2, the number of teeth of the secondary planetary gears (22) be Z3 and the number of teeth of the secondary sun gear (20) be Z4, values for Z1 to Z4 are set individually so that a value of C below becomes a multiple of three, as a result of which three primary planetary gears (21) are disposed at equal intervals in a rotating direction of the primary sun gear (19) and three secondary planetary gears (22) are disposed at equal intervals in a rotating direction of the secondary sun gear (20).

$$C = |Z1 \times Z3 - Z2 \times Z4|/GCD\ (Z2,\ Z3)$$

where, GCD (Z2, Z32): a great common divisor of Z2 and Z3.

In addition, parenthesized alphanumeric characters denote corresponding constituent elements in an embodiment which will be described later. Hereinafter, this will be true in this section.

According to the invention, the value of C above indicates the number of corresponding primary and secondary planetary gears that can be disposed at equal intervals with respect to the rotational directions of the primary and secondary sun gears. By the value of C being made to be the multiple of three, it becomes possible to dispose three primary planetary gears and three secondary planetary gears at equal intervals in the rotational direction of the corresponding primary and secondary sun gears, respectively. By this, the three primary planetary gears and the three secondary planetary gears can support the corresponding primary and secondary sun gears, respectively, in such a manner that the primary and secondary sun gears do not move substantially in the radial direction. By supporting the primary and secondary sun gears in such a manner as not to move substantially, the meshing of the first and second primary sun gears with the corresponding primary and secondary planetary gears can be maintained in a good condition, thereby making it possible to reduce the occurrence of unnecessary torque fluctuation and the generation of noise in an ensured fashion.

In addition, the three primary planetary gears and the three secondary planetary gears can surround the corresponding primary and secondary sun gears, respectively, and hence, the primary and secondary planetary gears can restrict the primary and secondary sun gears from moving in the radial direction in the ensured fashion, respectively. Additionally, the transfer ratio varying mechanism can be made small in size by the primary and secondary sun gears being disposed inside spaces surrounded by the three corresponding primary planetary gears and the three corresponding secondary planetary gears, respectively.

Brief Description of the Drawings

Fig. 1 is an exemplary diagram showing a schematic configuration of a vehicle steering system according to an embodiment of the invention.
Fig. 2 is a sectional view of a main part of the embodiment.
Fig. 3 is a sectional view of the main part taken along the line III-III in Fig. 2.
Fig. 4 is a sectional of a main part of another embodiment of the invention.

Best Mode for Carrying out the Invention

Preferred embodiments of the invention will be described by reference to the accompanying drawings.

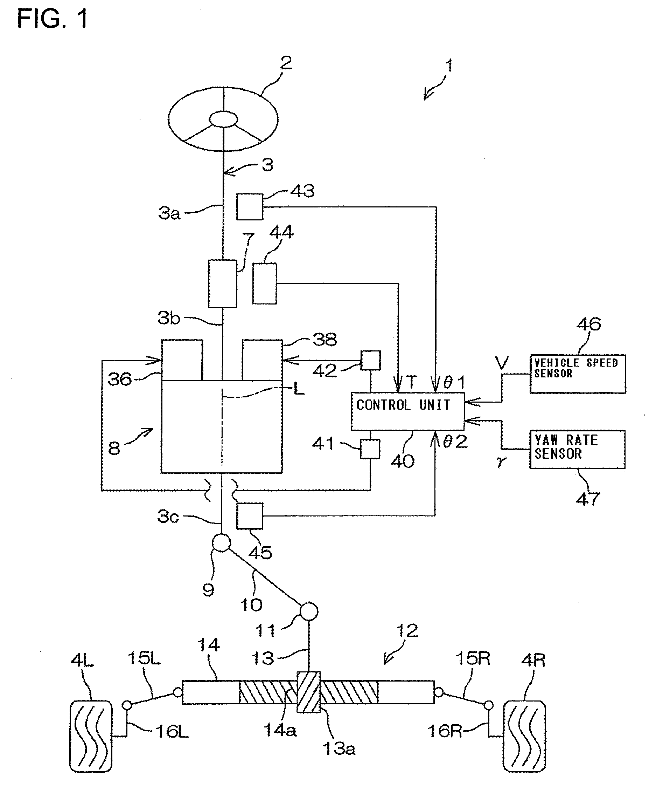

Fig. 1 is a exemplary diagram showing a schematic configuration of a vehicle steering system 1 according to an embodiment of the invention. Referring to Fig. 1, the vehicle steering system 1 is such as to turn left and right steered road wheels 4R, 4L by imparting a steering torque imparted by a steering member such as a steering wheel to each of the steered road wheels 4R, 4L via a steering shaft 3 as a steering shaft and includes a planetary gear mechanism 8 as a transfer ratio varying mechanism which can vary a transfer ratio $\theta2/\theta1$ of a turning angle $\theta2$ of the steered road wheels 4R, 4L to a steering angle $\theta1$ (a rotational angle) of the steering member 2.

This vehicle steering system 1 includes the steering member 2 and the steering shaft 3 as a steering shaft connected to the steering member 2. The steering shaft 3 includes primary, secondary and tertiary portions 3a, 3b, 3c which are disposed on the same axis L.
The primary portion 3a is coupled to the steering member 2, and the secondary portion 3b is coupled to the primary portion 3a via a torsion bar 7 in such a manner as to rotate relatively. A permissible value of relative rotation between the primary portion 3a and the secondary portion 3b via the torsion bar 7 is referred to as a small value, and it can be considered that the primary portion 3a and the secondary portion 3b rotate substantially together with each other.

The planetary gear mechanism 8 is provided between the secondary portion 3b and the tertiary portion 3c. The tertiary portion 3c is connected to the steered road wheels 4R, 4L via a universal joint 9, an intermediate shaft 10, a universal joint 11 and a steering mechanism 12.

The steering mechanism 12 includes a pinion shaft 13 connected to the universal joint 11 and a rack shaft 14 as a turning shaft which includes a rack 14a meshing with a pinion 13a at a distal end of the pinion shaft 13 and extends in a transverse direction of a vehicle, and knuckle arms 16R, 16L which are coupled, respectively, to a pair of end portions of the rack shaft 14 via tie rods 15R, 15L.

By the configuration described above, a steering torque from the steering member 2 is transmitted to the steering mechanism 12 via the primary and secondary portions 3a, 3b of the steering shaft 3, the planetary gear mechanism 8, the tertiary portion 3c and the like. In the steering mechanism 12, the rotation of the pinion 13a is transformed into the axial motion of the rack shaft 14, whereby the knuckle arms 16R, 16L are turned via the corresponding tie rods 15R, 15L, respectively. By this action, the steered road wheels 4R, 4L which are coupled to the corresponding knuckle arms 16R, 16L are turned accordingly.

The planetary gear mechanism 8 is coupled to the secondary portion 3b and the tertiary portion 3c of the steering shaft 3 in such a manner as to rotate differentially, so as to vary a gear ratio between the secondary portion 3b and the tertiary portion 3c. By the gear ratio being so varied, the transfer ratio $\theta2/\theta1$ is varied.

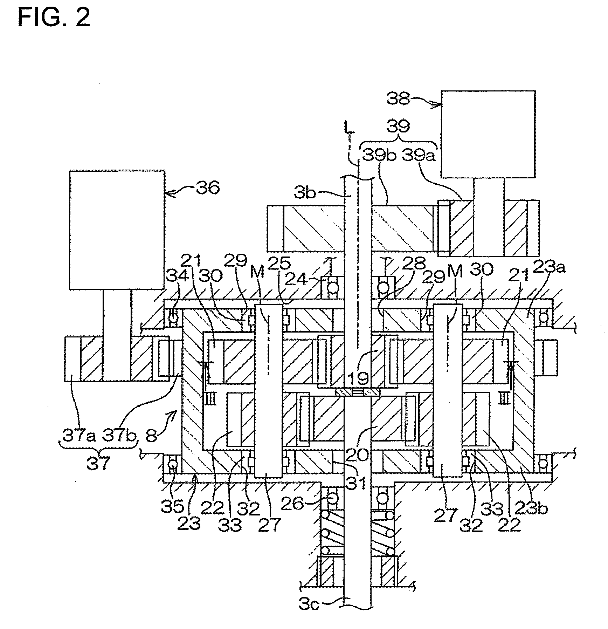

Fig. 2 is a sectional view of a main part of the embodiment. Referring to Fig. 2, the planetary gear mechanism 8 includes a primary sun gear 19 which is aligned on the same axis L as that of the secondary portion 3b of the steering shaft 3 so as to rotate together with the secondary portion 3b, a secondary sun gear 20 which is disposed on an axis L which coincides with the primary sun gear 19 so as to rotate together with the tertiary portion 3c, three primary planetary gears 21 which mesh with the primary sun gear 19, three secondary planetary gears 22 which mesh with the secondary sun gear 20, and a carrier 23 which supports the primary and secondary planetary gears 21, 22 in such a manner as not only to rotate on their own axes but also to rotate about the axis L (to walk therearound).

The secondary portion 3b of the steering shaft 3 is supported rotatably on a housing 25 via a rolling bearing 24 such as a ball bearing. The housing 25 is supported on a vehicle body (not shown).

The tertiary portion 3c of the steering shaft 3 is supported rotatably on the housing 25 via a rolling bearing 26 such as a ball bearing.

The primary and secondary sun gears 19, 20 and the primary and secondary planetary gears 21, 22 are each formed by the use of, for example, a spur gear as an external gear on an outer circumference of which teeth are formed, and a predetermined backlash is provided between a meshing portion where the sun gear meshes with the planetary gears. Note that other gears having parallel axes such as helical gears may be used as the aforesaid gears 19 to 22.

The primary sun gear 19 is disposed at one end of the secondary portion 3b of the steering shaft 3 and is connected to the steering member via the steering shaft 3.

The secondary sun gear 20 is disposed at one end of the tertiary portion 3c of the steering shaft 3 and is connected to the steered road wheels via the tertiary portion 3c. The primary and secondary sun gears 19, 20 are formed separately from each other and are allowed to rotate relative to each other on the axis L.

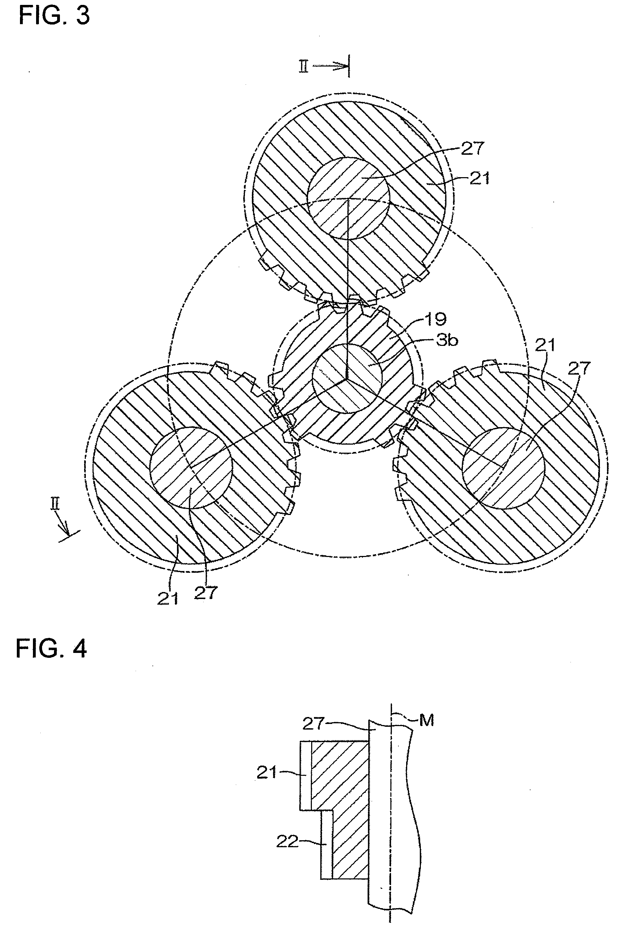

Fig. 3 is a sectional view of the main part taken along the line III-III in Fig. 2. Note that Fig. 2 is a sectional view taken along the line II-II in Fig. 3. Referring to Figs. 2 and 3, the primary planetary gears 21 and the secondary planetary gears 22 are disposed at equal intervals along a rotational direction of the corresponding primary and secondary gears 19, 20, respectively (in Fig. 3, only the primary sun gear 19 and the primary planetary gears 21 are shown. In addition, although only parts of teeth portions of the primary sun gear 19 and the primary planetary gears 21 are shown, teeth are formed along the full circumference thereof.).

Each primary planetary gear 21 is aligned with the corresponding secondary planetary gear 22 on the same axis to make a pair, and these primary and secondary planetary gears which make the pair are supported on a common shaft 27. In addition, the primary and secondary planetary gears 21, 22 making the pair each have an axis M which is parallel to the axis L and are fixedly press fitted on the corresponding shaft 27.

For the three primary planetary gears 21 to be allowed to be disposed at equal intervals in the rotational direction of the primary sun gear 19 and for the three secondary planetary gears 22 to be allowed to be disposed at equal intervals in the rotational direction of the secondary sun gear 20, the numbers of teeth of the primary sun gear 19, the primary planetary gears 21, the secondary sun gear 20, the secondary planetary gears 22 are set to satisfy a particular relationship.

Specifically, when letting the number of teeth of the primary sun gear 19 be Z1, the number of teeth of the primary planetary gears 21 be Z2, the number of teeth of the secondary planetary gears 22 be Z3, and the number of teeth of the secondary sun gear 20 be Z4, values of the respective numbers of teeth Z1 to Z4 are set so that a value of C below becomes a multiple of three.

$$C = |Z1 \times Z3 - Z2 \times Z4|/GCD\,(Z2,\ Z3)$$

where, GCD (Z2, Z32): a great common divisor of Z2 and Z3.

The value of C above indicates the number of corresponding primary and secondary planetary gears 21, 22 that can be disposed at equal intervals with respect to the rotational directions of the primary and secondary sun gears 19, 20. As a result of the value of C being made to be the multiple of three, it becomes possible to dispose three primary planetary gears 21 and three secondary planetary gears 22 at equal intervals in the rotational direction of the corresponding primary and secondary sun gears 19, 20, respectively.

Examples of respective numbers of teeth Z1 to Z4, torque ratio that is transmitted from the primary sun gear 19 to the secondary sun gear 20, value of $|Z1 \times Z3 - Z2 \times Z4|$ and value of GCD (Z2, Z3) are shown in Table 1. Note that torque ration = $(Z1 \times Z3) / (Z2 \times Z4)$.

Table 1

|  | Example 1 | Example 2 | Example 3 |
|---|---|---|---|
| Z1 | 25 | 24 | 24 |
| Z2 | 22 | 21 | 20 |
| Z3 | 19 | 20 | 20 |
| Z4 | 28 | 25 | 27 |
| torque ratio | 0.771 | 0.914 | 0.889 |
| \|Z1Z3-Z2Z4\| | 141 | 45 | 60 |
| GCD(Z2, Z3) | 1 | 1 | 20 |
| C | 141 | 45 | 3 |
| three equal interval disposition | Possible | Possible | Possible |

As is shown in Example 1 in Table 1, when the numbers of teeth Z1 = 25, Z2 = 22, Z3 = 19, Z4 = 28, $|Z1 \times Z3 - Z2 \times Z4|$ = 141 and GCD (Z2, Z3) = 1, whereby C = 141 = 3 $\times$ 47. Consequently, the primary and secondary planetary gears 21, 22 can be disposed in three locations each at equal intervals with respect to the rotational directions of the corresponding primary and secondary sun gears 19, 20.

Similarly, in Example 2, the numbers of teeth Z1 = 24, Z2 = 21, Z3 = 20, Z4 = 25, which result in $|Z1 \times Z3 - Z2 \times Z4|$ = 45 and GCD (Z2, Z3) = 1, whereby C = 45 = 3 $\times$ 15. Consequently, the primary and secondary planetary gears 21, 22 can be disposed in three locations each at equal intervals with respect to the rotational directions of the corresponding primary and secondary sun gears 19, 20.

Similarly, in Example 3, the numbers of teeth Z1 = 24, Z2 = 20, Z3 = 20, Z4 = 27, which result in $|Z1 \times Z3 - Z2 \times Z4|$ = 60 and GCD (Z2, Z3) = 20, whereby C = 3. Consequently, the primary and secondary planetary gears 21, 22 can be disposed in three locations each at equal intervals with respect to the rotational directions of the corresponding primary and secondary sun gears 19, 20.

In addition, as examples in which the primary and secondary planetary gears 21, 22 cannot be disposed in three locations each at equal intervals with respect to the rotational directions of the corresponding primary and secondary sun gears 19, 20, Example 4, Example 5 and Example 6 which are shown in the following Table 2 can be illustrated.

Table 2

|  | Example 4 | Example 5 | Example 6 |
|---|---|---|---|
| Z1 | 17 | 24 | 24 |
| Z2 | 12 | 22 | 20 |
| Z3 | 14 | 21 | 20 |
| Z4 | 15 | 25 | 26 |
| torque ratio | 1.322 | 0.916 | 0.923 |
| \|Z1Z3-Z2Z4\| | 58 | 46 | 40 |
| GCD(Z2, Z3) | 2 | 1 | 20 |
| C | 29 | 46 | 2 |

(continued)

|  | Example 4 | Example 5 | Example 6 |
|---|---|---|---|
| three equal interval disposition | Not possible | Not possible | Not possible |

In Example 4 shown in Table 2, the numbers of teeth $Z1 = 17$, $Z2 = 12$, $Z3 = 14$, $Z4 = 15$, which result in $|Z1 \times Z3 - Z2 \times Z4| = 58$ and GCD $(Z2, Z3) = 2$, whereby $C = 29$. Consequently, C does not become a multiple of three, and therefore, the primary and secondary planetary gears 21, 22 cannot be disposed in three locations each at equal intervals with respect to the rotational directions of the corresponding primary and secondary sun gears 19, 20.

Similarly, in Example 5, the numbers of teeth $Z1 = 24$, $Z2 = 22$, $Z3 = 21$, $Z4 = 25$, which result in $|Z1 \times Z3 - Z2 \times Z4| = 46$ and GCD $(Z2, Z3) = 1$, whereby $C = 46$. Consequently, C does not become a multiple of three.

Similarly, in Example 6, the numbers of teeth $Z1 = 24$, $Z2 = 20$, $Z3 = 20$, $Z4 = 26$, which result in $|Z1 \times Z3 - Z2 \times Z4| = 40$ and GCD $(Z2, Z3) = 20$, whereby $C = 2$. Consequently, C does not become a multiple of three.

The carrier 23 is formed into, for example, a hollow cylindrical shape and accommodates the primary sun gear 19, the secondary sun gear 20, the primary planetary bears 21, the secondary planetary gears 22 and the shafts 27.

An insertion hole 28 is formed in an inside diameter portion at one end portion 23a of the carrier 23, and the secondary portion 3b of the steering shaft 3 is inserted thereinto. In addition, bearing holding holes 29 are formed at a radially intermediate portion of this one end portion 23a. The bearing holding holes 29 correspond to the shafts 27 and are provided in three locations at equal intervals in a circumferential direction of the carrier 23. Each bearing holding hole 29 holds a bearing 30 such as a roller bearing which is attached to an end portion of the corresponding shaft 27, so as to support rotatably the one end portion of the corresponding shaft 27.

An insertion hole 31 is formed in an inside diameter portion at the other end portion 23b of the carrier 23 and the tertiary portion 3c of the steering shaft is inserted thereinto. In addition, bearing holding holes 32 are formed at a radially intermediate portion of this the other end portion 23b. The bearing holding holes 32 correspond to the shafts 27 and are provided in three locations at equal intervals in the circumferential direction of the carrier 23. Each bearing holding hole 32 holds a bearing 33 such as a roller bearing which is attached to the other end portion of the corresponding shaft 27, so as to support rotatably the one end portion of the corresponding shaft 27.

By this configuration, the carrier 23 supports the primary and secondary planetary gears 21, 22 in such a manner as to rotate about their axis centers via the three corresponding shafts 27 which support the primary planetary gears 21 and the secondary planetary gears 22 which correspond to each other.

One end and another end of an outer circumferential surface of the carrier 23 are supported rotatably on the housing 25 via bearings 34, 35 such as ball bearings, respectively.

The carrier 23 is driven to rotate by a planetary gear mechanism motor 36. The planetary gear mechanism motor 36 is made up of, for example, a brushless motor and can vary the gear ratio between the primary sun gear 19 and the secondary sun gear 20 by varying the rotational speed of the carrier 23. A rotational output of the planetary gear mechanism motor 36 is transmitted to the carrier 23 via a speed reduction mechanism 37 which includes a small gear 37a and a large gear 37b. The small gear 37a is coupled to an output shaft of the planetary gear mechanism motor 36 in such a manner as to rotate together, and the large gear 37b is provided on the outer circumferential surface of the carrier 23 in such a manner as to rotate together.

The vehicle steering system 1 includes a reaction force compensating motor 38 for compensating for a steering reaction force acting on the steering member 2 in relation to the operation of the planetary gear mechanism 8. The reaction force compensating motor 38 is made up of, for example, a brushless motor. A rotational output of the reaction force compensating motor 38 is transmitted to the secondary shaft 3b of the steering shaft 3 via a small gear 39a and a large gear 39b. The small gear 39a is coupled to an output shaft of the reaction force compensating motor 38 in such a manner as to rotate together, and the large gear 39b is coupled to the secondary portion 3b of the steering shaft 3 in such a manner as to rotate together.

Referring to Fig. 1 again, the planetary gear mechanism motor 36 and the reaction force compensating motor 38 are controlled individually by a control unit 40 which includes a CPU, a RAM and a ROM. The control unit 40 is connected to the planetary gear mechanism motor 36 via a drive circuit 41 and is also connected to the reaction force compensating motor 38 via a drive circuit 42.

In addition, connected individually to the control unit 40 are a steering angle sensor 43, a torque sensor 44, a turning angle sensor 45, a vehicle speed sensor 46 and a yaw rate sensor 47.

A signal signaling a rotational angle of the primary portion 3a of the steering shaft 3 is inputted from the steering angle sensor 43 as a value corresponding to the steering angle $\theta 1$ which is an operation amount of the steering member 2 from a neutral position thereof.

A signal signaling a torque transmitted between the primary and secondary portions 3a, 3b of the steering shaft 3 is inputted from the torque sensor 44 as a value corresponding to a steering torque T acting on the steering member 2.

A signal signaling a rotational angle of the tertiary portion 3c is inputted from the turning angle sensor 45 as a value corresponding to the turning angle θ2.

A signal signaling a vehicle speed V is inputted from the vehicle speed sensor 46.

A signal signaling a yaw rate y of the vehicle is inputted from the yaw rate sensor 47.

The control unit 40 controls the drive of the planetary gear mechanism motor 36 and the reaction force compensating motor 38 based on the input signals from the respective sensors 43 to 47 and the like.

According to this embodiment, the following functions and advantages can be provided. Namely, the value of C denotes the number of primary and secondary planetary gears 21, 22 that can be disposed at equal intervals with respect to the rotational directions of the corresponding primary and secondary sun gears 19, 29.

By the value of C being made to be the multiple of three, it becomes possible to dispose three primary planetary gears 21 and three secondary planetary gears 22 at equal intervals in the rotational directions of the corresponding primary and secondary sun gears 19, 20. By this, the three primary planetary gears 21 and the three secondary planetary gears 22 can support the corresponding primary and secondary sun gears 19, 22, respectively, in such a manner that the primary and secondary sun gears 19, 20 do not move substantially in the radial direction (in such a manner that the primary and secondary sun gears 19, 20 are allowed to move only a small amount equaling to the amount of backlash.

By supporting the primary and secondary sun gears 19, 20 in such a manner that they do not move in the radial direction, the meshing between the primary and secondary sun gears 19, 20 and the corresponding primary and secondary planetary gears 21, 22 can be maintained in a good condition, thereby making it possible to reduce the occurrence of unnecessary torque fluctuation and the generation of noise in an ensured fashion. Further, a necessity of supporting the one end of the secondary portion 3b of the steering shaft 3 by the carrier 23 is obviated, and this obviates a necessity of providing a bearing between the carrier 23 and the secondary portion 3b. Furthermore, a necessity of supporting the one end of the tertiary portion 3c of the steering shaft 3 by the carrier 23 is obviated, and this obviates a necessity of providing a bearing between the carrier 23 and the tertiary portion 3c. Consequently, the number of bearings can be reduced.

In addition, the three primary planetary gears 21 and the three secondary planetary gears 22 can surround the corresponding primary and secondary sun gears 19, 20, thereby making it possible to restrict the primary and secondary sun gears 19, 20 from being caused to be shifted in the radial direction in an ensured fashion.

Further, the transfer ratio varying mechanism 8 can be made small in size by the primary and secondary sun gears 19, 20 being disposed inside spaces surrounded by the three corresponding primary planetary gears 21 and the three corresponding secondary planetary gears 22, respectively.

In addition, by employing the primary planetary gears 21 and the secondary planetary gears 22 three each, compared with the case where the primary planetary gear 21 and the secondary planetary gears 22 are provided two each, the load per planetary gear can be reduced, thereby making it possible not only to reduce the meshing noise of the planetary gear mechanism 8 but also to increase the durability thereof. Since the load per planetary gear is reduced, the planetary gears 21, 22 can each be made smaller in size, and the strength thereof does not have to be increased. Consequently, the planetary gear mechanism 8 can be made smaller in size and the production costs cal also be reduced.

The invention is not limited to the embodiment that has been described heretofore but can be modified variously without departing from the scope of the claim. For example, as is shown in Fig. 4, primary and secondary planetary gears 21, 22 may be formed integrally by the use of a single member.

**Claims**

1. A vehicle steering system comprising a transfer ratio varying mechanism for varying a transfer ratio of a turning angle of steered road wheels to a steering angle of a steering member,

   the transfer ratio varying mechanism comprising:

   a primary and secondary sun gears which are provided relatively rotatably about axes which coincide with each other;

   three primary planetary gears which mesh with the primary sun gear;

   three secondary planetary gears which mesh with the secondary sun gear and rotate together with the corresponding primary planetary gears about the same axial centers; and

   a carrier which rotates about the axes and which supports the primary planetary gears and the secondary planetary gears with three shafts which individually support the primary planetary gears and the secondary planetary gears which correspond to each other in such a manner that the primary planetary gears and the secondary planetary gears which correspond to each other rotates about their axial centers,

   the first sun gear is connected to the steering member, and the second sun gear is connected to the steered road wheels, and

   when letting the number of teeth of the primary sun gear be Z1, the number of teeth of the primary planetary gears be Z2, the number of teeth of the secondary planetary gears be Z3 and the number of teeth of the secondary sun gear be Z4, values for Z1 to Z4 are set individually so that a value of C below becomes a multiple of three, as a result of which three primary planetary gears are disposed at equal intervals in a rotating direction of the primary sun gear and three secondary planetary gears are disposed at equal intervals in a rotating direction of the secondary sun gear

$$C = |Z1 \times Z3 - Z2 \times Z4|/GCD\ (Z2,\ Z3)$$

where, GCD (Z2, Z32): a great common divisor of Z2 and Z3.

# FIG. 1

# FIG. 2

...

**FIG. 3**

**FIG. 4**

## INTERNATIONAL SEARCH REPORT

| | International application No. |
|---|---|
| | PCT/JP2007/072009 |

A.   CLASSIFICATION OF SUBJECT MATTER
*B62D5/04*(2006.01)i, *B62D6/00*(2006.01)i, *F16H1/28*(2006.01)i, *B62D101/00*
(2006.01)n, *B62D113/00*(2006.01)n, *B62D119/00*(2006.01)n, *B62D137/00*
(2006.01)n

According to International Patent Classification (IPC) or to both national classification and IPC

B.   FIELDS SEARCHED

Minimum documentation searched (classification system followed by classification symbols)
B62D5/04, B62D6/00, F16H1/28, B62D101/00, B62D113/00, B62D119/00,
B62D137/00

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2005-170309 A  (Toyoda Machine Works, Ltd.), 30 June, 2005 (30.06.05), Par. Nos. [0026] to [0035]; Figs. 3, 4 (Family: none) | 1 |
| X | JP 2004-256087 A  (Toyoda Machine Works, Ltd.), 16 September, 2004 (16.09.04), Par. Nos. [0023] to [0025]; Figs. 1 to 4 (Family: none) | 1 |
| A | JP 2005-344759 A  (Koyo Seiko Co., Ltd.), 15 December, 2005 (15.12.05), Fig. 2 (Family: none) | 1 |

| [×]  Further documents are listed in the continuation of Box C. | [ ]  See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 February, 2008 (08.02.08) | 19 February, 2008 (19.02.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/072009

C (Continuation). DOCUMENTS CONSIDERED TO BE RELEVANT

| Category* | Citation of document, with indication, where appropriate, of the relevant passages | Relevant to claim No. |
|---|---|---|
| A | JP 60-209362 A (Nissan Motor Co., Ltd.), 21 October, 1985 (21.10.85), Fig. 1 (Family: none) | 1 |
| A | JP 2004-293657 A (Japan Servo Co., Ltd.), 21 October, 2004 (21.10.04), Fig. 11 (Family: none) | 1 |

Form PCT/ISA/210 (continuation of second sheet) (April 2007)

**EP 2 090 495 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005344759 A